# EUROPEAN PATENT SPECIFICATION

(11) **EP 0 703 845 B1**
(45) Date of publication and mention of the grant of the patent: **26.08.1998**
(21) Application number: 94911345.0
(22) Date of filing: 18.03.1994
(51) Int. Cl.: B23K 31/02, B63B 3/26

(54) **A METHOD FOR MANUFACTURING A BULB BAR AND A BULB BAR MANUFACTURED IN ACCORDANCE WITH THE METHOD**
VERFAHREN ZUR HERSTELLUNG EINES SPANTBALKENS UND NACH DIESEM VERFAHREN HERGESTELLTER SPANTBALKEN
POUTRE A BULBE ET PROCEDE DE FABRICATION

(30) Priority: 26.03.1993 SE 9301013
(43) Date of publication of application: 03.04.1996
(73) Proprietor: Inexa Profil AB, S-971 28 Lulea (SE)
(72) Inventor: ERICSSON, Owe, S-722 33 Västeras (SE)
(74) Representative: Onn, Thorsten
(86) International application number: SE9400243
(87) International publication number: WO9422632

(56) References cited:
- US-A- 2 263 272

## Description

The present invention relates to a method for manufacturing a bulb bar, and to a bulb bar manufactured in accordance with the method.

Bulb bars are comprised of a rolled single-piece sections which include a flat web part or plate and a generally rounded head part which slopes in towards the web part. Because of their rounded shapes, bulb bars can be used favourably as reinforcements in large shell or mantle sheet-metal structures with which ease of access and good adhesion are required in conjunction with surface treatment operations. Accordingly, bulb bars are often used as reinforcements in ships' hulls and in particular in twin-hull ships where the space between the hulls functions as a ballast tank, into which salt water is pumped in and from which salt water is pumped out. Ease of access and good adhesion in conjunction with surface treatment processes are therefore important.

The bulb bar is welded horizontally along the inner surface of the hull and with relevant parts forms together with the web of the bar a first essentially load-absorbing part. The bulb-part of the bulb bar forms together with the web part of said bar a second essential force-absorbing part.

The forces acting on the bulb bar are mainly tension and compression forces, wherein the bulb bar exhibits a force or load distribution which increases outwardly from the centre of gravity formed by the bulb-part, the flat strip-part and a part of the ship's hull.

Those forces acting on the ship's hull increase linearly with the distance from the water surface, wherein the forces acting on the bulb bars become greater the further down the hull the bars are located.

Consequently, stiffenings or reinforcements which have very high bending resistance are required in the bottom part of the ship in order to take-up these forces. The requisite bending resistance of the bulb bar is obtained because the bar has an optimum relationship between bulb height and web width, or more specifically because of an accurately chosen ratio between the moment of inertia of the bulb-part and the moment of inertia of the flat strip-part.

The bending strength of a bulb bar welded to the hull of a ship is calculated in a similar manner, although with the difference that a part of the metal plate of the hull in this case forms a second end-part of the bulb bar, and the moment of inertia of this part must also be taken into account when making the aforesaid calculations.

At present, bulb bars are manufactured homogeneously in a series of standard dimensions, where the number of variants thereof are formed as a combination sequence of the total width, plate thickness and bulb height of the bulb bar, meaning that a number of different dimensional variants of the bulb bar must be incorporated in the production planning. This not only increases the costs of the manufacturer, but also the costs for the client, because it is necessary to keep in stock a large number of such variants and also because of the high tool costs entailed by the different types of rolls that are needed to produce all of these product variants.

Consequently, it is not possible at present to roll economically all bulb bars as integral structures in all of the dimensional variants required. Neither is it possible with present-day rolling mills to roll bulb bars in those dimensions required to take-up the forces that act on the lowermost parts of the hull of a large ship, i.e. in general dimensions that range from 450-650 mm, due to the fact that the manufacturer is limited to a given number of reduction stages or passes when rolling a bulb bar from the starting billet to the final dimensions and shape of the rolled section, and also due to the fact that the manufacturer is also restricted to the use of one groove in the roll profile for production of the bulb-part of the bar.

It is known and might be thought suitable to extend an existing bulb bar with a conventional flat bar. Although such a solution might be possible in some few cases, it is found that the resultant bulb bar will not possess the necessary mechanical strength values in the majority of cases, since the ratio of bulb height to web width is not optimal, or more specifically the ratio between the respective moments of inertia of said parts.

The problems associated with rolling sections of complicated shapes or sections of large dimensions in one single piece is generally known to the art and is described, for instance, in U.S. Patent Specification 2,263,272, although this patent specification is concerned with the manufacture of I-beams which exceed standard dimensions, the problems being solved by rolling T-sections and providing the sections with a web of suitable size. However, this method of manufacture is encumbered with a number of drawbacks. For instance, the web and the T-profiles have a dependency relationship wherein the choice of web thickness must follow the thickness of the outwardly projecting shaft-part of the T-section and wherein the dependency relationship does not afford the requisite coordination effects. Furthermore, because the shaft-part and the web-part are welded together by a local heating process and heat is only conducted away to a limited extent, there is a risk of burning through these parts in the process of welding them together. This patent specification offers no contribution to the solution of the problems associated with the aforesaid bulb bars.

At present, constructional engineers are referred to the use of L-sections for taking-up the forces that act on the lowermost parts of the hull of a large ship, i.e. generally L-sections having dimensions ranging from 450 to 650 mm. Although these L-sections are stronger and have a higher weight ratio than a bulb bar, because of their shape the L-sections cannot be easily reached for the purpose of surface-treating the sections, while the sharp corners of the sections make it difficult to obtain good adhesion when surface-treating the sections.

The object of the present invention is to eliminate the aforesaid problems by providing a product of such configuration as to enable the bulb bar to be manufactured in desired dimensions in existing rolling mills and with the aid of conventional methods and to produce bulb bars at a lower production cost than when practicing known techniques. To this end, there is proposed a method according to claim 1 and a bulb bar according to claim 4.

More specifically, the bulb-parts and web-parts are manufactured in a standard series of different dimensions and then placed in storage, from where the bulb-parts and the web-parts are selected in a convenient manner according to customers' orders or according to prevailing production plans, therewith to provide a bulb bar which is optimum for the purpose intended, i.e. a bulb bar in which the bulb height, web width and web thickness of the bar components are chosen to obtain optimum mechanical strength properties. Because the bulb-part is rolled to a shape which lacks a flange, i.e. has a cross-sectional shape which lacks such projections as those which are intended to be welded to a web-part when practicing the known prior art, there is no dependency relationship between the flange thickness of the different parts, thereby enabling many different variants of bulb bar to be obtained from a few available dimensions or variants of the bulb-parts and web-parts from which the bulb bar is formed. When stored, these web-parts or plates may also conceivably be used as components in other types of rolled and welded final products, for instance I-beams, L-beams, etc.

The aforesaid objects and other objects of the present invention and also the advantages afforded thereby will be apparent from the following description and also from the accompanying drawings to which the description refers and, in which
Fig. 1 is a perspective view of a welded bulb bar;
Fig. 2 is an end view of a bulb-part;
Fig. 3 is an end view of a welded bulb par; and
Fig. 3A is a cross-sectional view of the weld location illustrated in Fig. 3.

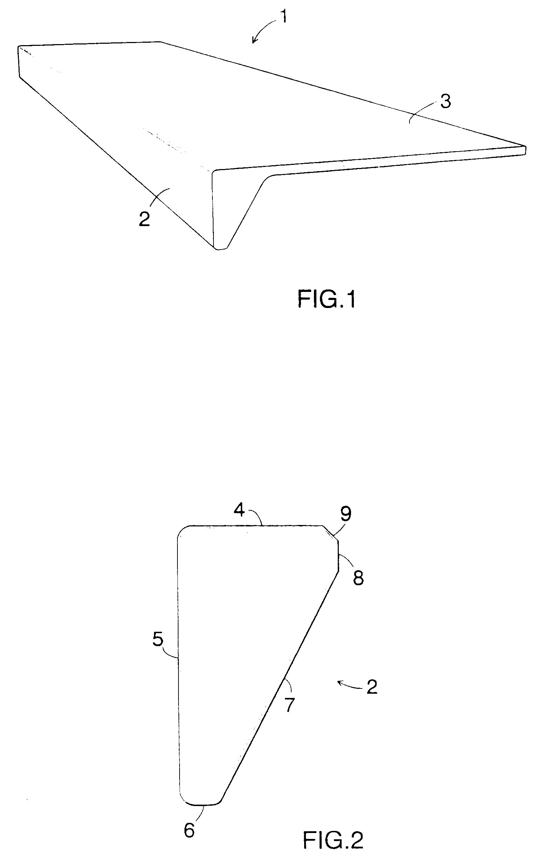

The reference numeral 1 in Fig. 1 identifies generally a bulb bar which includes a bulb-part 2 and a plate or web-part 3 welded securely to the bulb-part.

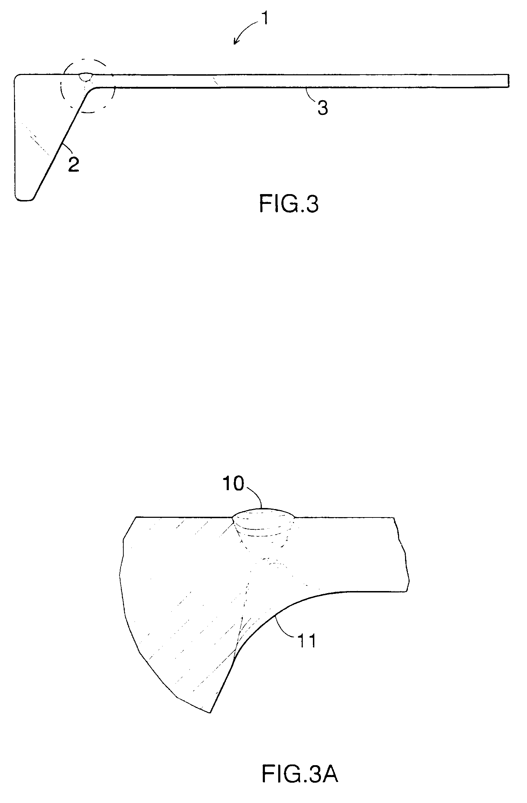

According to the present invention, the bulb-part 2 illustrated in Fig. 2 has the form of a rectangle which has been bevelled heavily at one corner and which has substantially rounded corners. The bulb height is equal to the length of that side 5 which is defined by the mutually parallel sides 4, 6 which are spaced furthest apart and extend at right angles to the side 5, of which sides 4, 6 one side 4 is substantially longer than the other side 6 and wherein the pronounced chamfer forms a side 7 which extends obliquely towards the side 4 and then continues with a bevelled surface 8 that extends parallel with the side 5 and terminates at a bevelled surface 9 which slants at an angle to the side 4. The parallel bevel 8 of the aforesaid bevels forms a longitudinally extending supportive and contact region, while the bevel 9 forms a joint preparation for the web-part 3. As illustrated in Fig. 3, the web-part 3 is joined to the bulb-part 2 by means of one or more welds 10, 11, wherein each weld extends along a respective peripheral, longitudinally extending contact region between the web-part 3 and the bulb-part 2, as illustrated in Fig. 3A.

On the basis of specific customer orders or on the basis of prevailing production plans, there is chosen from the bulb-bar components a bulb height, web width and web thickness that are appropriate for the purpose intended, so that the finished bulb bar will possess optimum mechanical strength properties. The bulb bar is produced in accordance with the following method steps:
- a separate bulb-part 2 is rolled;
- a separate flat strip or web-part 3 is rolled; and
- the bulb-part 2 is welded securely to the web-part 3;
wherein in order to facilitate welding, the bulb-part 2 is suitably rolled to a flange-free shape so as to enable a web-part 3 which possesses suitably selected dimensions for obtaining a bulb bar of requisite bending strength to be welded to a longitudinally extending edge region 8, 9 of the bulb, and to enable heat generated during the welding process to be conducted into the bulb-part, wherein said longitudinally extending edge region presents bevelled surfaces 8, 9, of which the bevel 8 forms a longitudinally extending supportive and contact region for a subsequent welding process and the bevel 9 forms a joint preparation surface. Prior to being welded, the parts 2, 3 are positioned with the bevel 8 on the rolled bulb-part 2 facing towards the longitudinally extending side of the plate or web-part 3, whereafter the parts are welded together longitudinally.

The advantages afforded by the aforedescribed embodiment and the bulb bar 1 obtained thereby will be apparent from a study of the characteristic features.

The bulb bar 1 has no dependency relationship between the flange thickness of the different parts because the bulb-part is rolled to a shape which has no flanges. This enables many different variants of a bulb bar to be obtained from a few variants of the bulb and web parts 2, 3 of the bulb bar, therewith enabling bulb bars which have an optimum relationship between bulb height and web width to be readily manufactured. Because of the construction of the bulb bar, bulb bars can be produced in all requested dimensions, and even in dimensions which exceed present-day standard dimensions.

Furthermore, a bulb-part 2 which has been rolled to a flangeless shape, as illustrated in Fig. 2, will enable the weld arc to be directed advantageously onto the bulb-part and the heat generated during the welding process can be led into the bulb-part, therewith reducing the risk of burning-through the bar components, which is an additional advantage.

It will be evident that the bulb-part 2, which is often subjected to the greatest loads and stresses, can be made from a material of higher mechanical strength than the material from which the web-part 3 is made.

The present invention, however, is not restricted to the aforedescribed and illustrated embodiments thereof, since changes and modifications can be made within the scope of the invention as defined in the following Claims.

## Claims

1. A method for manufacturing a bulb bar; whereby
- a separate bulb part (2) is made by rolling;
- a separate flat bar or web-part (3) is made by rolling;
- and the bulb-part (2) is firmly welded to the web-part (3),
- wherein the bulb-part (2) is rolled to a shape without any flanges whereby the side connected to the web-part (3) is planar in order to enable said web-part to be welded to the side region of the bulb-part independently of the dimensions of the web part (3).

2. A method according to Claim 1, **characterized** in that at least the web part is rolled in standard series of different dimensions; and
- as to obtain a bulb bar with the requisite bending strenght a web-part (3), whose dimensions have been suitably selected, is welded firmly to the bulb part part (2).

3. A method according to Claim 1-2, **characterized** in that both the bulb part (2) and web-part (3) are rolled in standard series of different dimensions and as to obtain a bulb bar with the requsite bending strenght a bulb part and a web-part (3), whose relative dimensions have been suitably selected, is welded firmly to each other in order to obtain said bulb bar.

4. A bulb bar, comprising a separately produced bulb-part (2) and a separately produced web-part (3) and welds that join them together, wherein the separately produced bulb-part (2) has a shape without any flanges whereby the side region of the bulb-part to be connected to the web-part is planar in order to enable the web-part (3) to be welded to said side region of the bulb-part independently of the dimensions of the of the web part.

5. A bulb bar according to Claim 4, **characterized** in that the bulb-part (2) includes a longitudinally extending edge region which presents first and second bevel surfaces (8, 9) of which the first bevel surface (8) serves as a longitudinally extending supportive and contact region for the web-part (3) and the second bevel surface (9) serves as a joint preparation for the welding process.

6. A bulb bar according to Claims 4-5, **characterized** in that the bulb-part (2) is made of a material which has a greater mechanical strength than the material from which the web-part (3) is made.

## Patentansprüche

1. Verfahren zur Herstellung einer Wulststange, wobei
- ein separates Wulstteil (2) durch Walzen hergestellt wird,
- eine separate Flachstange oder Stegteil (3) durch Walzen hergestellt wird,
- und das Wulstteil (2) fest mit dem Stegteil (3) verschweißt wird,
- wobei das Wulstteil (2) in eine Form ohne jeglichen Flansch gewalzt wird, bei der die Seite, die mit dem Stegteil (3) verbunden eben ist, damit das genannte Stegteil unabhängig von den Abmessungen des Stegteils (3) an dem Seitenbereich des Wulstteils (2) verschweißt werden kann.

2. Verfahren nach Anspruch 1,
**dadurch gekennzeichnet, daß** zumindest das Stegteil durch Walzen in Standardserien mit unterschiedlichen Abmessungen hergestellt wird, und daß zur Herstellung einer Wulststange mit der erforderlichen Biegefestigkeit ein Stegteil (3), dessen Abmessungen passend gewählt wurden, fest mit dem Wulstteil (2) verschweißt wird.

3. Verfahren nach Anspruch 1 und 2,
**dadurch gekennzeichnet, daß** sowohl das Wulstteil (2) wie auch das Stegteil (3) durch Walzen in Standardserien mit unterschiedlichen Abmessungen hergestellt werden, und daß zur Herstellung einer Wulststange mit der erforderlichen Biegefestigkeit ein Wulstteil und ein Stegteil (3), deren jeweilige Abmessungen passend gewählt wurden, fest miteinander verschweißt werden, um die genannte Wulststange zu erhalten.

4. Wulststange, bestehend aus einem separat hergestellten Wulstteil (2) und einem separat hergestellten Stegteil (3) sowie Schweißungen, die diese zusammenhalten, wobei das Wulstteil (2) eine Form ohne jeglichen Flansch aufweist, bei der der Seitenbereich des Wulstteils, der mit dem Stegteil verbunden werden soll, eben ist, damit das Stegteil (3) unabhängig von den Abmessungen des Stegteils an den genannten Seitenbereich des Wulstteils angeschweißt werden kann.

5. Wulststange nach Anspruch 4,
**dadurch gekennzeichnet, daß** das Wulstteil (2) einen sich in Längsrichtung erstreckenden Kantenbereich hat, der eine erste und eine zweite abgeschrägte Fläche (8, 9) aufweist, wobei die erste abgeschrägte Fläche (8) als ein sich in Längsrichtung erstreckender Halte- und Kontaktbereich für das Stegteil (3) dient, und die zweite abgeschrägte Fläche (9) für den Schweißvorgang zur Vorbereitung der Verbindung dient.

6. Wulststange nach Anspruch 4 und 5,
**dadurch gekennzeichnet, daß** das Wulstteil (2) aus einem Material besteht, das eine größere mechanische Festigkeit hat als das Material, aus dem das Stegteil (3) besteht.

## Revendications

1. Procédé de fabrication d'une barre à bulbe, dans lequel :
- une partie séparée de bulbe (2) est formée par laminage,
- une partie de joue ou de barre plate séparée (3) est formée par laminage, et
- la partie de bulbe (2) est soudée fermement sur la partie de joue (3),
dans lequel la partie de bulbe (2) est laminée à une configuration sans aucun flasque de manière que le côté raccordé à la partie de joue (3) soit plan et permette la soudage de la partie de joue sur la région latérale de la partie de bulbe indépendamment des dimensions de la partie de joue (3).

2. Procédé selon la revendication 1, caractérisé en ce que la partie de joue au moins est laminée suivant une série normalisée de dimensions différentes, et
pour l'obtention d'une barre à bulbe ayant la résistance nécessaire à la flexion, une partie de joue (3) dont les dimensions ont été sélectionnées convenablement est soudée fermement à la partie de bulbe (2).

3. Procédé selon la revendication 1 ou 2, caractérisé en ce que la partie de bulbe (2) et la partie de joue (3) sont laminées suivant des séries normalisées de dimensions différentes et, pour l' obtention d' une barre à bulbe ayant la résistance nécessaire à la flexion, une partie de bulbe et une partie de joue (3) dont les dimensions relatives ont été choisies convenablement sont soudées fermement l'une sur l'autre pour l'obtention, de la barre à bulbe.

4. Barre à bulbe comprenant une partie de bulbe (2) produite séparément et une partie de joue (3) produite séparément et des soudures qui les relient, dans laquelle la partie de bulbe (2) produite séparément a une configuration sans aucun flasque si bien que la région latérale de la partie de bulbe raccordée à la partie de joue est plane afin qu'elle permette le soudage de la partie de joue (3) à la région latérale de la partie de bulbe indépendamment des dimensions de la partie de joue.

5. Barre à bulbe selon la revendication 4, caractérisée en ce que la partie de bulbe (2) comprend une région longitudinale de bord qui présente uns première et une seconde surface chanfreinée (8, 9) parmi lesquelles la première surface chanfreinée (8) est utilisée comme région longitudinale de support, et de contact pour la partie de joue (3) et la seconde surface chanfreinée (9) est utilisée comme préparation de joint pour l'opération de soudage.

6. Barre à bulbe selon la revendication 4 ou 5, caractérisée en ce que la partie de bulbe (2) est formée d'un matériau qui a une résistance mécanique supérieure à celle du matériau dont est formée la partie de joue (3).
